# EUROPEAN PATENT APPLICATION

(11) **EP 4 734 029 A1**
(43) Date of publication of application: **29.04.2026**
(21) Application number: 25210881.6
(22) Date of filing: 23.10.2025
(51) Int. Cl.: G06Q 20/32, H04W 4/80

(54) **A METHOD, DEVICE, AND EQUIPMENT FOR PROCESSING NFC SERVICES OF SMART WEARABLE DEVICES**

(30) Priority: 23.10.2024 CN 202411480649
(71) Applicant: Alipay (Hangzhou) Digital Service Technology Co., Ltd., Hangzhou, Zhejiang 310000 (CN)
(72) Inventor: RUAN, Xuecong, Hangzhou, Zhejiang, 310000 (CN)
(74) Representative: Fish & Richardson P.C.

(57) **Abstract**

Embodiments of this specification disclose intelligent wearable device NFC service processing methods, apparatuses, and devices, applied to an intelligent wearable device. The solution includes: controlling an NFC card reader on the intelligent wearable device to be in an off state; receiving an NFC service trigger instruction for the intelligent wearable device in the off state; entering a specified service application on the intelligent wearable device in response to the NFC service trigger instruction, and automatically switching the NFC card reader from the off state to an on state by using the specified service application; reading target service information from a target NFC implement through the NFC card reader in the on state after the intelligent wearable device is close to the target NFC implement, so that the specified service application obtains the target service information; and executing a corresponding target service based on the target service information by using the specified service application.

## Description

### TECHNICAL FIELD

This specification relates to the field of near field communication technologies, and in particular, to intelligent wearable device NFC service processing methods, apparatuses, and devices.

### BACKGROUND

With development of Internet technologies and widespread use of smartphones, more services can be performed by using corresponding applications on the smartphones, which brings great convenience to people's lives.

In the field of services such as payment, two-dimensional codes are widely used currently. In actual applications, payment based on a two-dimensional code also needs cumbersome operations for some users or some scenarios. As more mobile terminals, especially smartphones, have a near field communication (NFC) function, many smartphones support an NFC payment method. Specifically, the smartphone keeps being in a card emulation mode, and is emulated as an NFC card for reading by an NFC implement that collects payment; or the smartphone keeps being in a card reader mode, and monitors whether an NFC implement that collects payment or an NFC card exists around the smartphone.

In addition to popularization of the smartphones, some intelligent wearable devices, which are mainly smartwatches, are increasing. To enable the smartwatches to support payment, some payment providers directly apply payment solutions of the smartphones to the smartwatches.

However, compared with the smartphones, the smartwatches are limited by differences such as energy consumption and screen sizes. Therefore, a payment solution more applicable to the smartwatches is needed.

### SUMMARY

One or more embodiments of this specification provide intelligent wearable device NFC service processing methods, apparatuses, and devices, and storage media, to resolve the following technical problems: a payment solution more applicable to smartwatches is needed.

To resolve the above-mentioned technical problem, one or more embodiments of this specification are implemented as follows:
One or more embodiments of this specification provide an intelligent wearable device NFC service processing method, applied to an intelligent wearable device. The method includes: controlling an NFC card reader on the intelligent wearable device to be in an off state; receiving an NFC service trigger instruction for the intelligent wearable device in the off state; entering a specified service application on the intelligent wearable device in response to the NFC service trigger instruction, and automatically switching the NFC card reader from the off state to an on state by using the specified service application; reading target service information from a target NFC implement through the NFC card reader in the on state after the intelligent wearable device is close to the target NFC implement, so that the specified service application obtains the target service information; and executing a corresponding target service based on the target service information by using the specified service application.

One or more embodiments of this specification provide an intelligent wearable device NFC service processing apparatus, applied to an intelligent wearable device. The apparatus includes: a control module, configured to control an NFC card reader on the intelligent wearable device to be in an off state; a receiving module, configured to receive an NFC service trigger instruction for the intelligent wearable device in the off state; a switching module, configured to: enter a specified service application on the intelligent wearable device in response to the NFC service trigger instruction, and automatically switch the NFC card reader from the off state to an on state by using the specified service application; a reading module, configured to read target service information from a target NFC implement through the NFC card reader in the on state after the intelligent wearable device is close to the target NFC implement, so that the specified service application obtains the target service information; and an execution module, configured to execute a corresponding target service based on the target service information by using the specified service application.

One or more embodiments of this specification provide an intelligent wearable device NFC service processing device, applied to an intelligent wearable device. The device includes: at least one processor; and a storage communicatively connected to the at least one processor. The storage stores instructions that are capable of being executed by the at least one processor, and the instructions are executed by the at least one processor, so that the at least one processor is capable of performing the following operations: controlling an NFC card reader on the intelligent wearable device to be in an off state; receiving an NFC service trigger instruction for the intelligent wearable device in the off state; entering a specified service application on the intelligent wearable device in response to the NFC service trigger instruction, and automatically switching the NFC card reader from the off state to an on state by using the specified service application; reading target service information from a target NFC implement through the NFC card reader in the on state after the intelligent wearable device is close to the target NFC implement, so that the specified service application obtains the target service information; and executing a corresponding target service based on the target service information by using the specified service application.

One or more embodiments of this specification provide a non-volatile computer storage medium, applied to an intelligent wearable device. The medium stores computer-executable instructions, and the computer-executable instructions are set as follows: controlling an NFC card reader on the intelligent wearable device to be in an off state; receiving an NFC service trigger instruction for the intelligent wearable device in the off state; entering a specified service application on the intelligent wearable device in response to the NFC service trigger instruction, and automatically switching the NFC card reader from the off state to an on state by using the specified service application; reading target service information from a target NFC implement through the NFC card reader in the on state after the intelligent wearable device is close to the target NFC implement, so that the specified service application obtains the target service information; and executing a corresponding target service based on the target service information by using the specified service application.

The at least one technical solution used in one or more embodiments of this specification can achieve the following beneficial effects: The solution avoids using a two-dimensional code to execute some target services such as payment, and further avoids a problem that a user who wants to use an intelligent wearable device to execute a target service cannot execute the target service based on an expectation when facing a merchant that has no code scanning and collection device. In particular, an NFC card reader on the intelligent wearable device is actively controlled to be in an off state by default, instead of being kept in an on state like an NFC card reader on a smartphone. When the NFC card reader on the intelligent wearable device needs to be used, the NFC card reader is automatically triggered, by using a specified service application, to switch to the on state, to complete the target service. As such, for the specified service application, this solution is pertinent, controllable, and secure, and is extremely friendly to an intelligent wearable device that is very sensitive to resources and power consumption. Therefore, this solution is more applicable to the intelligent wearable device including a smartwatch.

### BRIEF DESCRIPTION OF DRAWINGS

To describe the technical solutions in the embodiments of this specification or in the existing technology more clearly, the following briefly describes the accompanying drawings needed for describing the embodiments or the existing technology. Clearly, the accompanying drawings in the following descriptions merely show some embodiments of this specification, and a person of ordinary skill in the art can still derive other drawings from these accompanying drawings without creative efforts.
FIG. 1 is a schematic flowchart illustrating an intelligent wearable device NFC service processing method, according to one or more embodiments of this specification;
FIG. 2 is a schematic flowchart illustrating a solution for controlling and cooperating with an NFC card reader on an intelligent wearable device, according to one or more embodiments of this specification;
FIG. 3 is a schematic flowchart illustrating an auxiliary interaction solution of a parent mobile terminal to a child smartwatch, according to one or more embodiments of this specification;
FIG. 4 is a schematic flowchart illustrating an NFC service revocation auxiliary solution of a child smartwatch, according to one or more embodiments of this specification;
FIG. 5 is a schematic flowchart illustrating an implementation solution of a method in FIG. 1 in an application scenario, according to one or more embodiments of this specification;
FIG. 6(a) to FIG. 6(c) are schematic diagrams illustrating user-oriented content related to a child smartwatch, according to one or more embodiments of the specification;
FIG. 7 is a schematic structural diagram illustrating an intelligent wearable device NFC service processing apparatus, according to one or more embodiments of this specification; and
FIG. 8 is a schematic structural diagram illustrating another intelligent wearable device NFC service processing device, according to one or more embodiments of this specification.

### DESCRIPTION OF EMBODIMENTS

Embodiments of this specification provide an intelligent wearable device NFC service processing method, apparatus, and device, and a storage medium.

To enable a person skilled in the art to better understand the technical solutions in this specification, the following clearly and comprehensively describes the technical solutions in embodiments of this specification with reference to the accompanying drawings in embodiments of this specification. Clearly, the described embodiments are merely some rather than all of the embodiments of this specification. All other embodiments obtained by a person of ordinary skill in the art based on the embodiments of this specification without creative efforts shall fall within the protection scope of this application.

Intelligent wearable devices described in this application are mainly smartwatches. Certainly, the intelligent wearable devices can be some other devices such as smart bands or smart rings. Compared with smartphones, the intelligent wearable devices usually have clearly smaller screens or have no screen, and usually have lower powers and processing capabilities. Therefore, energy consumption and a calculation burden are more sensitive. In this application, a solution is created for such an actual situation. In addition, for a child smartwatch, the solution is further improved to be applied to a case in which a user of the child smartwatch is a minor such as a child.

As described in the background, currently, a payment solution of the smartphone is directly applied to the smartwatch mainly. A payment service based on a two-dimensional code is used as an example. A payment code can be generated on the smartwatch. A merchant performs code scanning by using a code scanning device. After code scanning, the merchant initiates payment in a background. However, if the merchant has no code scanning device, it may be difficult to use the smartwatch to perform payment based on the two-dimensional code. For the smartphone, the smartphone can perform code scanning on the merchant. Therefore, if the merchant has no code scanning device, payment by the smartphone is not impeded. However, the smartwatch does not have a code scanning function or is inconvenient for a code scanning operation, which causes a unique problem. Then, an NFC-based payment service is used as an example. Most user mobile terminals use a card emulation working mode. However, this manner is greatly limited by a mobile phone manufacturer and is not flexible enough. The applicant considers to apply, to the smartwatch, a solution that is applied by the applicant to the smartphone and in which the card emulation working mode is actively used. In this solution, an NFC card reader on the smartphone keeps being in an on state. When an NFC card is around or an emulated card approaches, information in the card can be read through NFC, and a corresponding application on the smartphone is woken up based on information content to execute a corresponding service. However, when a test is actually made on the smartwatch, energy consumption is high, which affects endurance of the smartwatch. Therefore, it is considered to create an NFC payment solution more applicable to the smartwatch.

The following continues to describe the solutions of this application based on such an overall situation.

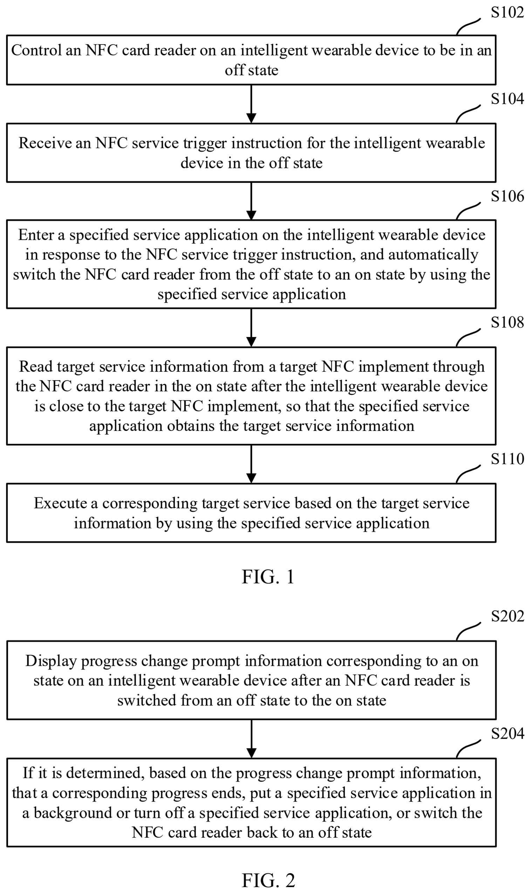

FIG. 1 is a schematic flowchart illustrating an intelligent wearable device NFC service processing method according to one or more embodiments of this specification. This procedure can be performed by an intelligent wearable device, and a software level can specifically relate to an operating system of the intelligent wearable device and a specified service application installed on the intelligent wearable device, for example, a payment application and an instant messaging application. For ease of description, in some embodiments, that the intelligent wearable device is mainly a smartwatch is used as an example for description. The intelligent wearable device supports an NFC function, has an NFC card reader, and can have a screen, or can have no screen.

The procedure in FIG. 1 includes the following steps:
S102: Control an NFC card reader on the intelligent wearable device to be in an off state.

In one or more embodiments of this specification, the NFC card reader on the intelligent wearable device is in the off state by default. In the off state, the NFC card reader does not actively attempt to perform an NFC card read operation, and does not actively monitor whether an NFC sensing object approaches around, thereby effectively reducing energy consumption of the intelligent wearable device.

S104: Receive an NFC service trigger instruction for the intelligent wearable device in the off state.

When a user needs to use the NFC function of the intelligent wearable device, the NFC function is triggered in a predetermined convenient triggering manner, so that the intelligent wearable device receives the NFC service trigger instruction.

For example, after the intelligent wearable device turns on a screen, an NFC service shortcut entry is displayed. The NFC service shortcut entry is generated based on an NFC service non-shortcut access path of the specified service application, and is used to quickly enter an NFC card reader mode page of the specified service application. In response to an access operation (for example, the user can tap the NFC service shortcut entry, or the access operation is implemented based on a gesture) performed by the user on the NFC service shortcut entry, the correspondingly generated NFC service trigger instruction for the intelligent wearable device is received. The NFC service shortcut entry can be displayed in an easy-to-view or easy-to-access place, for example, directly on a home screen or a secondary home screen (for example, if the secondary home screen exists, home screen switching is performed through upward/downward flipping or leftward/rightward flipping) of the intelligent wearable device. Certainly, the user can also trigger an NFC service through the NFC service non-shortcut access path. As such, operations are more cumbersome.

In one or more embodiments of this specification, the NFC service trigger instruction is not merely used to trigger the NFC card reader, and corresponds to the specified service application. The NFC card reader can be triggered accurately first. As such, a subsequent state of the NFC card reader can be controlled by the specified service application (for example, after service execution is completed, the NFC card reader is switched back to the off state in a timely manner), which does not affect another application and helps accurately control energy consumption.

S106: Enter the specified service application on the intelligent wearable device in response to the NFC service trigger instruction, and automatically switch the NFC card reader from the off state to an on state by using the specified service application.

In a solution previously tried by the applicant, the NFC card reader is in a dominant position, and the NFC card reader triggers a corresponding application based on read information in a default on state. However, in the solution of this application, the specified service application is in a dominant position, and a state of the NFC card reader can be controlled by the specified service application, which is used based on a need.

After the NFC service trigger instruction is received, if the specified service application is not started, the specified service application is automatically started and is put in the foreground; or if the NFC service application is previously started, the specified service application keeps being in the foreground, to execute a target service. Not only the specified service application is entered, but also an NFC service page (for example, the NFC card reader mode page) of the specified service application can be directly reached. More information can be prompted to the user on the page, for example, a service corresponding to the page, an operation to be performed next, etc.

To improve security, an immediate verification means such as a password or a biological feature can be additionally set. If verification succeeds, triggering can be normally implemented; otherwise, access to the specified service application can be refused, and control of the NFC card reader can be rejected.

S108: Read target service information from a target NFC implement through the NFC card reader in the on state after the intelligent wearable device is close to the target NFC implement, so that the specified service application obtains the target service information.

After the NFC card reader is switched to the on state through active triggering, if a distance between the intelligent wearable device and the target NFC implement is enough to perform NFC communication, the NFC card reader can read to obtain the target service information. For example, in a payment service scenario, payment information is obtained through reading; and in a social scenario, business card information is obtained through reading.

S110: Execute a corresponding target service based on the target service information by using the specified service application.

In one or more embodiments of this specification, if a server needs to participate in execution of the target service, the specified service application can interact with the server based on the target service information, to complete the target service, for example, pay a payment amount indicated in the target service information. In this case, the intelligent wearable device needs to be in an online state, and the specified service application mainly performs real-time remote communication with the server, to complete the target service. The target NFC implement can obtain a service execution result from the server.

After the specified service application indirectly obtains enough information indirectly from the target NFC implement by using the NFC card reader, it can be considered that the NFC card reader has completed the task this time, and the NFC card reader can switch back to the off state in a timely manner, to minimize energy consumption.

The method in FIG. 1 avoids using a two-dimensional code to execute some target services such as payment, and further avoids a problem that a user who wants to use an intelligent wearable device to execute a target service cannot execute the target service based on an expectation when facing a merchant that has no code scanning and collection device. In particular, an NFC card reader on the intelligent wearable device is actively controlled to be in an off state by default, instead of being kept in an on state like an NFC card reader on a smartphone. When the NFC card reader on the intelligent wearable device needs to be used, the NFC card reader is automatically triggered, by using a specified service application, to switch to the on state, to complete the target service. As such, for the specified service application, this solution is pertinent, controllable, and secure, and is very friendly to an intelligent wearable device that is extremely sensitive to resources and power consumption. Therefore, this solution is more applicable to the intelligent wearable device including a smartwatch.

Based on the method shown in FIG. 1, this specification further provides some specific implementations and extended solutions of the method, which are further described below.

In one or more embodiments of this specification, although a shortcut icon can be used as the NFC service shortcut entry, and access is performed by using a tap operation, operations are still not smooth. Based on this, this application further provides a smoother trigger solution, to trigger an NFC service.

In this solution, turning on the screen by the intelligent wearable device can be triggered by the user by using a first gesture, and the NFC service shortcut entry prompts a second gesture. Neither the first gesture nor the second gesture is a tap operation or a biometric feature verification operation. Therefore, in this case, the NFC service shortcut entry may not be accessed through a tap, and the user only needs to view the NFC service shortcut entry. The first gesture is, for example, a gesture for lifting a hand to look at a watch, and the second watch is, for example, a gesture of further changing a direction of the hand (for example, a gesture of advancing the hand, for another example, a gesture of rapidly waving the hand horizontally). For example, the user can lift the hand to watch the smartwatch, to trigger a watch face to turn on a screen, so as to see the second gesture by using the displayed NFC service shortcut entry. If there is a gesture of advancing a hand, and further, the hand can be moved forward toward a front target NFC implement to trigger the NFC service, it can be seen that this operation process is extremely smooth, redundant operations are reduced as much as possible, user experience is good, and energy saving, security, and convenience needs are balanced.

Further, to reduce a misoperation probability, a second gesture that may be different can be used dynamically each time. In this case, the user may need to view the screen-on displayed NFC service shortcut entry each time.

Similarly, the above-mentioned solution based on cooperation between the first gesture and the second gesture can also be applied to an intelligent wearable device without a screen. In this case, for example, a fixed first gesture and a fixed second gesture (which are, for example, allowed to be predetermined by the user) can be used. For another example, a dynamic second gesture can be used based on a voice prompt.

In one or more embodiments of this specification, to help the user to master a real-time situation, a control situation of the NFC card reader can be explicitly displayed, to guide and constrain the user to a certain extent. This helps improve security, and further helps ensure that control of energy consumption reaches an expected level. Based on this idea, a solution for controlling and cooperating with an NFC card reader on an intelligent wearable device is provided. FIG. 2 shows a schematic flowchart illustrating the solution.

The procedure in FIG. 2 includes the following steps:
S202: Display progress change prompt information corresponding to the on state on the intelligent wearable device after the NFC card reader is switched from the off state to the on state.

In one or more embodiments of this specification, the progress change prompt information can include countdown information and/or detected progress information of the target service. In a case of the countdown information, after switching to the on state is performed, a countdown task can be established and executed, and remaining operation time of the user or remaining available time of the NFC card reader this time is prompted in an interface. For the user, this manner is more mandatory. For detected and obtained progress information of the target service, based on one or more landmark stage points in a target service execution process, a stage point before which the NFC card reader needs to be used can be displayed; and operations of the NFC card reader at the stage points can be further prompted. For the user, this manner is clearer and more transparent, especially applicable to a user group such as a minor or an elderly.

S204: If it is determined, based on the progress change prompt information, that a corresponding progress ends, put the specified service application in a background or turn off the specified service application, or switch the NFC card reader back to the off state.

To prevent the NFC card reader from unnecessarily continuing being in the on state, based on progress monitoring (for example, when it is determined that countdown ends; for another example, when it is determined that a landmark stage point after a use stage of the NFC card reader arrives), the specified service application can be automatically inactivated in a timely manner, and in particular, the NFC card reader can be automatically switched back to the off state in a timely manner, thereby avoiding a problem that resources are exclusively occupied and energy consumption increases.

In actual applications, many minors, especially children, are often restricted by parents or schools from using smartphones. Therefore, this group uses child smartwatches as a replacement to some extent. In this case, the intelligent wearable device can be specifically a child smartwatch. This application mainly further improves the above-mentioned basic solution for particularities in this case.

The applicant summarizes the problems caused by the particularities in this case. According to a first aspect, the child smartwatch is less adaptable than an adult smartwatch. Therefore, there may be fewer NFC implements that can well support the child smartwatch, or although an NFC implement supports the child smartwatch, the NFC implement is limited in terms of a service and consequently cannot be normally used. According to a second aspect, because a user of the child smartwatch is a minor or even a young child, aspects such as safety and behavior validity are tested.

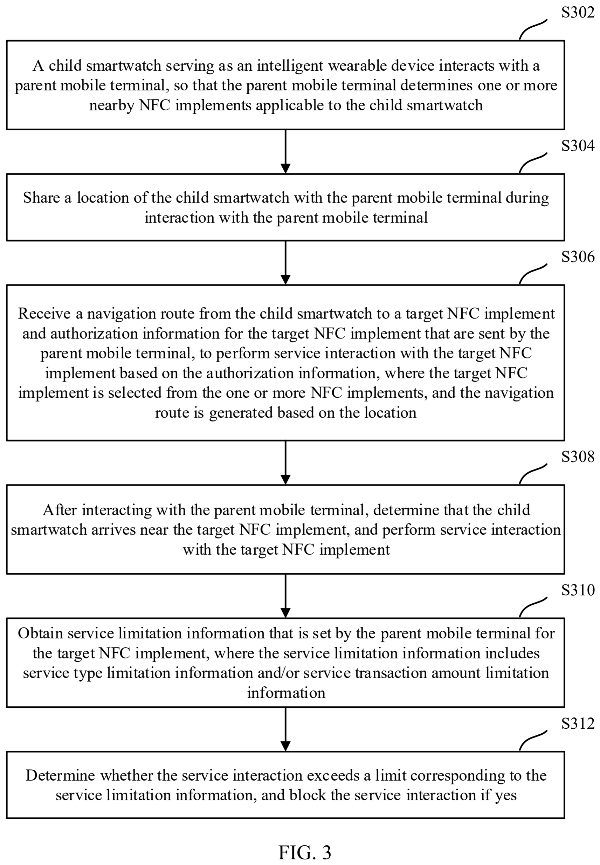

In view of the problem in the first aspect, in this application, it is considered that the child smartwatch can obtain a capability of determining an applicable NFC implement around. However, in actual applications, a capability of the child smartwatch is limited, an implementation is difficult, and there is a hidden problem in terms of security. To resolve the problem, this application provides an auxiliary interaction solution of a parent mobile terminal to the child smartwatch. FIG. 3 is a schematic flowchart illustrating the solution.

The procedure in FIG. 3 includes the following steps:
S302: The child smartwatch serving as the intelligent wearable device interacts with the parent mobile terminal, so that the parent mobile terminal determines one or more nearby NFC implements applicable to the child smartwatch.

The parent mobile terminal is held by a parent of a user of the child smartwatch. The child smartwatch can display, for example, an interactive two-dimensional code. The parent mobile terminal scans the interactive two-dimensional code, triggers the parent mobile terminal to be the child smartwatch, and queries the nearby NFC implements applicable to the child smartwatch. The interactive two-dimensional code can be used to determine information such as a model or a capability of the child smartwatch. There can be a plurality of such interactive two-dimensional codes, which respectively correspond to different functions or services, and an applicable NFC implement that is queried and selected more precisely in such function or service dimensions and that is provided for the parent mobile terminal is selected on the child smartwatch.

The solution in the previous paragraph is applicable to a scenario in which a parent is around a child, and can even support a scenario in which a child smartwatch runs offline. If the parent is not in the same place as the child, interaction can be performed through remote communication, and related information is remotely sent from the child smartwatch to the parent mobile terminal for query.

The parent mobile terminal can be a smartphone, a tablet, an in-vehicle infotainment system, or another device whose screen and capability are better than those of the child smartwatch. As such, one or more NFC implements applicable to the child smartwatch can be queried and displayed. Certainly, if the capability is strong enough, the parent mobile terminal can alternatively be a device such as an adult smartwatch.

S304: Share a location of the child smartwatch with the parent mobile terminal during interaction with the parent mobile terminal.

If the parent is around the child, an operation of sharing the location may not be performed, and a location of the parent mobile terminal can be directly used. As such, location information does not need to be unnecessarily exposed from the child smartwatch. To perform location sharing, for example, the location can be included in the above-mentioned interactive two-dimensional code.

S306: Receive a navigation route from the child smartwatch to the target NFC implement and authorization information for the target NFC implement that are sent by the parent mobile terminal, to perform service interaction with the target NFC implement based on the authorization information, where the target NFC implement is selected from the one or more NFC implements, and the navigation route is generated based on the location.

After the parent mobile terminal queries and determines the applicable NFC implement, there can be a plurality of use solutions. For example, the parent can alternatively directly display the NFC implement to the child on the parent mobile terminal. The solution in step S306 to S312 is a more comprehensive solution.

In one or more embodiments of this specification, the target NFC implement is selected by the parent, and the authorization information is precisely set by the parent for the target NFC implement, instead of being generally set for the child smartwatch. As such, a risk that the child can execute this service on the target NFC implement can be controlled precisely in a timely manner. That is, precise authorization of the parent for a service object of the child is implemented, to prevent the child from abusing the child smartwatch to execute a service with the NFC implement, and ensure high timeliness of control by the parent. This helps improve security, and also helps to prevent the target NFC implement from doing evil.

S308: After interacting with the parent mobile terminal, determine that the child smartwatch arrives near the target NFC implement, and perform service interaction with the target NFC implement.

S310: Obtain service limitation information that is set by the parent mobile terminal for the target NFC implement, where the service limitation information includes service type limitation information and/or service transaction amount limitation information.

The service limitation information can be included in the authorization information, or can be independently set. In the latter case, the authorization information is unnecessary, and the parent can perform mild control based on only the service limitation information.

S312: Determine whether the service interaction exceeds a limit corresponding to the service limitation information, and block the service interaction if yes.

It is worthwhile to note that, in the above-mentioned example solution, blocking a risk from a source (namely, the NFC implement) is tried as much as possible based on the authorization information and/or the service limitation information. This manner may be particularly implemented through cooperation with a server (which is also a server corresponding to the child smartwatch) corresponding to the NFC implement. As such, the limitation can alternatively be determined by the server, which can reduce a burden on the child smartwatch. In this case, the parent can report the authorization information and/or the service limitation information to the server, and does not need to give the authorization information and/or the service limitation information to the child smartwatch. The server monitors and controls a subsequent service behavior of the target NFC implement. As such, the burden on the child smartwatch is further reduced, and the children can ensure device and service security without concerning for these back actions.

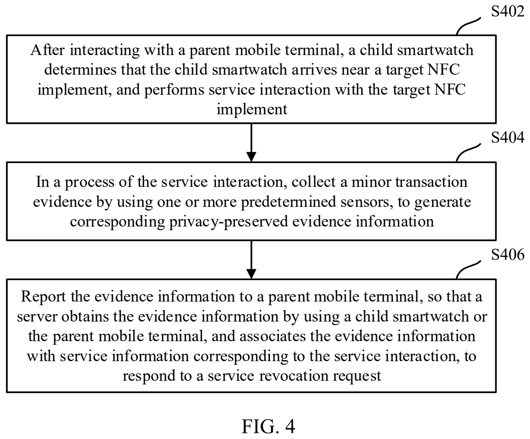

Further, to avoid a case in which the child abuses the child smartwatch to execute the NFC service and consequently, a loss is caused, one or more embodiments of this specification further provide a schematic flowchart illustrating an NFC service revocation auxiliary solution of the child smartwatch, as shown in FIG. 4.

The procedure in FIG. 4 includes the following steps:
S402: After interacting with the parent mobile terminal, the child smartwatch determines that the child smartwatch arrives near the target NFC implement, and performs service interaction with the target NFC implement.

S404: In a process of the service interaction, collect a minor transaction evidence by using one or more predetermined sensors, to generate corresponding privacy-preserved evidence information.

The transaction evidence is automatically collected before or during service interaction. It is worthwhile to note that evidence information obtained by collecting the minor transaction evidence here is mainly used to prove that a transactor is a minor, and is not used for identity verification. Audio, a video, or some other sensors can be used for corresponding evidence collection.

Here, it is considered that the child smartwatch may have no camera, or a camera capability is not high enough, or camera use is not convenient enough. Therefore, a preferred audio-based evidence collection solution is further provided. Certainly, evidence collection can also be combined. However, it is worthwhile to note that the audio-based evidence collection here is not only a simple automatic recording, but also an active guiding dialogue, to ensure that friendliness to the minor and validity of evidence collection are high enough.

In this solution, specifically, for example, an evidence collection guidance dialogue model is pre-trained for the minor. Here, special attention is paid to learning a talking manner of the minor and learning logical chain information of rigor of a needed evidence. Based on needs in the two dimensions, the trained evidence collection guidance dialogue model is used to immediately generate a voice dialogue. Before or during service interaction, the voice dialogue is played by the child smartwatch at a proper time, to guide a current minor to perform a question and answer dialogue, so as to clearly determine that the minor is performing a transaction indeed, and determine some needed background information details (for example, whether the parent is nearby, whether the minor wants to make a purchase, and whether a merchant performs induction nearby). Automatically recorded voice dialogue content is used as evidence information or is further refined and used as evidence information. Certainly, privacy preserving can be further performed on the evidence information through secure calculation, encryption, or confusion. Privacy preserving is performed on the evidence information, to avoid exposure of privacy of the minor, and also help prevent the evidence information from being tampered with.

S406: Report the evidence information to the parent mobile terminal, so that the server obtains the evidence information by using the child smartwatch or the parent mobile terminal, and associates the evidence information with service information corresponding to the service interaction, to respond to a service revocation request.

After a service is executed by using the child smartwatch, if the parent considers that there is a problem or even induction (for example, the merchant induces the minor to make in-game purchases and recharges), a corresponding service revocation request can be initiated to the server, and the service revocation request is associated with corresponding evidence information. Therefore, the server can more intelligently analyze and determine, based on the evidence information, whether to allow to revoke a corresponding service. As such, justice and efficiency are good, which helps avoid a liability dispute between the merchant and the user, and really ensures a benefit of a reasonable party.

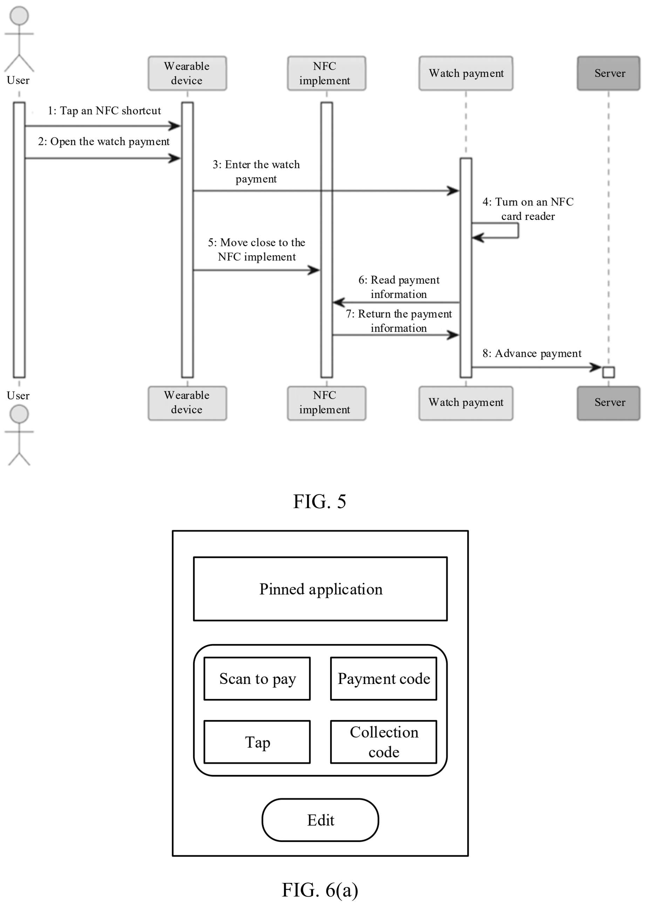

According to the above-mentioned descriptions, to typically and simply understand the main idea of this application, one or more embodiments of this specification provide a schematic flowchart illustrating an implementation solution of the method in FIG. 1 in an application scenario, as shown in FIG. 5.

In this application scenario, a subject "watch payment" in the figure can be specifically a watch payment application serving as the specified service application; a subject "wearable device" can be specifically a smartwatch, especially a child smartwatch, serving the intelligent wearable device; and the NFC implement is owned by the merchant.

An NFC shortcut (which serves as the NFC shortcut entry, where certainly, in addition to this shortcut for tapping by touching a screen, another form of shortcut entry can be used; for example, a specified operation manner of an entity control such as a knob on a watch is customized as the NFC shortcut entry; for another example, a specified expression of the user is used as the NFC shortcut entry; and when verifying that the specified expression passes, the user directly triggers automatic and quick entry) is pre-customized on at least one home screen of the smartwatch, to quickly enter an NFC card reader mode page. The NFC card reader mode page is a page of the watch payment application.

In the procedure in FIG. 5, an NFC card reader on the smartwatch is in the off state by default. The user taps the NFC shortcut on the smartwatch, to trigger opening of the watch payment application and directly enter the NFC card reader mode page of the watch payment application. The NFC card reader on the smartwatch is automatically turned on by using the watch payment application, so that the NFC card reader is temporarily in the on state. Then, the user can move the smartwatch close to an NFC implement of the merchant, so that the NFC card reader reads payment information from the NFC implement and returns the payment information to the watch payment application. The watch payment application interacts with the server based on the payment information to advance payment until payment is completed.

After the NFC card reader is turned on, countdown can be displayed. After countdown ends, the watch payment application can be put in the background or even closed, and the NFC card reader can be automatically switched back to the off state.

Intuitively, one or more embodiments of this specification further provide a schematic diagram of user-oriented content related to a child smartwatch, as shown in FIG. 6(a) to FIG. 6(c).

FIG. 6(a) is a schematic diagram of content on a home screen of a watch face. An intermediate area can be mainly focused on. There are four shortcut entrances. A shortcut entry "Tap" is the NFC service shortcut entry. The user can tap "Tap" to trigger entering of the NFC card reader mode page of the payment application and automatically turn on the NFC card reader.

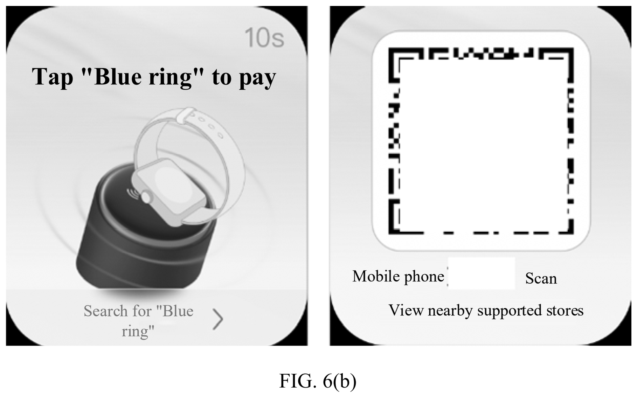

A left diagram in FIG. 6(b) is a schematic diagram of the NFC card reader mode page that is entered after "Tap" is triggered. In this case, the child smartwatch is moved close to the NFC implement (for example, a blue aperture is used in an induction area of the NFC implement for a prompt, so that the user makes an accurate touch). In addition, countdown of 10 seconds is displayed in an upper right corner. If countdown ends, the page can be automatically exited, and the NFC card reader is turned off. There is a link prompt "Search for Blue ring" at the bottom. "Blue ring" here represents the NFC implement applicable to the child smartwatch.

A right diagram in FIG. 6(b) is a schematic diagram of a two-dimensional code displayed after "Search for Blue ring" is triggered. In this case, the parent can scan the two-dimensional code by using a smartphone of the parent, to query the nearby NFC implement applicable to the child smartwatch.

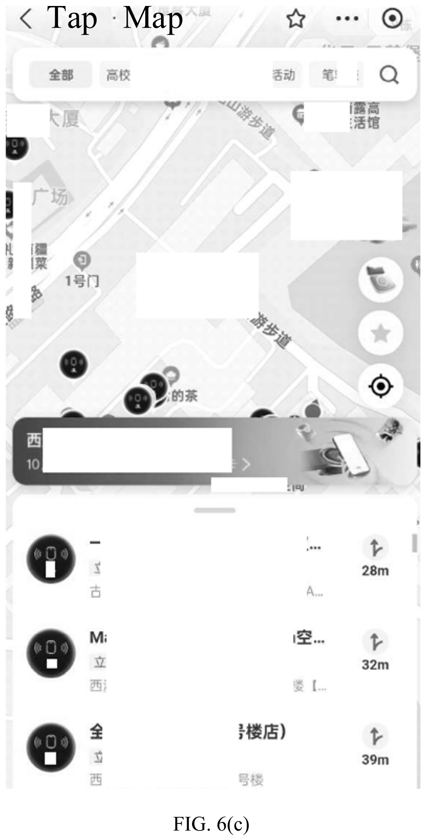

FIG. 6(c) is a schematic diagram of some nearby NFC implements that are identified after a parent performs code scanning by using a smartphone. Some privacy information is shielded, but an understanding of this solution is not affected. It can be seen that, on this page, an NFC implement (represented by a corresponding merchant) can be further selected to conveniently navigate.

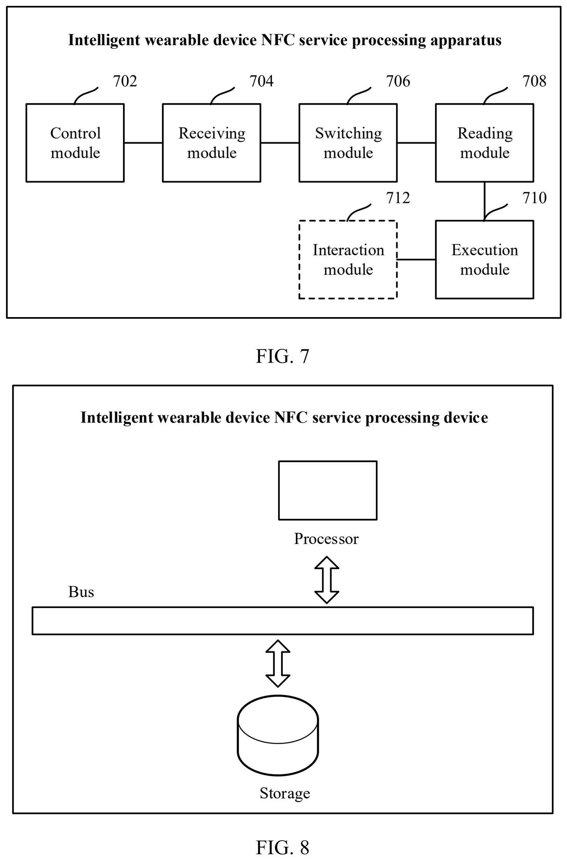

Based on the same idea, one or more embodiments of this specification further provide apparatuses and devices corresponding to the above-mentioned methods, as shown in FIG. 7 and FIG. 8. The apparatuses and the devices can correspondingly perform the above-mentioned methods and related optional solutions.

FIG. 7 is a schematic structural diagram illustrating an intelligent wearable device NFC service processing apparatus, according to one or more embodiments of this specification. The apparatus is applied to an intelligent wearable device, and the apparatus includes: a control module 702, configured to control an NFC card reader on the intelligent wearable device to be in an off state; a receiving module 704, configured to receive an NFC service trigger instruction for the intelligent wearable device in the off state; a switching module 706, configured to: enter a specified service application on the intelligent wearable device in response to the NFC service trigger instruction, and automatically switch the NFC card reader from the off state to an on state by using the specified service application; a reading module 708, configured to read target service information from a target NFC implement through the NFC card reader in the on state after the intelligent wearable device is close to the target NFC implement, so that the specified service application obtains the target service information; and an execution module 710, configured to execute a corresponding target service based on the target service information by using the specified service application.

Optionally, the receiving module 704 is configured to: display an NFC service shortcut entry after the intelligent wearable device turns on a screen, where the NFC service shortcut entry is generated based on an NFC service non-shortcut access path of the specified service application, and is used to quickly enter an NFC card reader mode page of the specified service application; and receive a corresponding generated NFC service trigger instruction for the intelligent wearable device in response to an access operation performed by a user on the NFC service shortcut entry.

Optionally, the turning on the screen is triggered by the user by using a first gesture, the NFC service shortcut entry prompts a second gesture, and neither the first gesture nor the second gesture is a tap operation; and the switching module 706 is configured to receive the corresponding generated NFC service trigger instruction for the intelligent wearable device in response to the second gesture that the user continues to make after the first gesture.

Optionally, after switching the NFC card reader from the off state to an on state, the switching module 706 is configured to: display progress change prompt information corresponding to the on state, where the progress change prompt information includes countdown information and/or detected progress information of the target service; and if it is determined, based on the progress change prompt information, that a corresponding progress ends, put the specified service application in a background or turn off the specified service application, or switch the NFC card reader back to the off state.

Optionally, the intelligent wearable device is a smartwatch.

Optionally, the intelligent wearable device is a child smartwatch. The apparatus further includes: an interaction module 712, configured to interact with a parent mobile terminal, so that the parent mobile terminal determines one or more nearby NFC implements applicable to the child smartwatch.

Optionally, the interaction module 712 is configured to: share a location of the child smartwatch with the parent mobile terminal, where the parent mobile terminal is a smartphone or a tablet; and receive a navigation route from the child smartwatch to the target NFC implement and authorization information for the target NFC implement that are sent by the parent mobile terminal, to perform service interaction with the target NFC implement based on the authorization information.
The target NFC implement is selected from the one or more NFC implements, and the navigation route is generated based on the location.

Optionally, after interacting with the parent mobile terminal, the interaction module 712 is configured to: determine that the intelligent wearable device arrives near the target NFC implement, and perform service interaction with the target NFC implement; obtain service limitation information that is set by the parent mobile terminal for the target NFC implement, where the service limitation information includes service type limitation information and/or service transaction amount limitation information; determine whether the service interaction exceeds a limitation corresponding to the service limitation information; and block the service interaction if yes.

Optionally, after interacting with the parent mobile terminal, the interaction module 712 is configured to: determine that the intelligent wearable device arrives near the target NFC implement, and perform service interaction with the target NFC implement; in a process of the service interaction, collect a minor transaction evidence by using one or more predetermined sensors, to generate corresponding privacy-preserved evidence information; and report the evidence information to the parent mobile terminal, so that a server obtains the evidence information by using the intelligent wearable device or the parent mobile terminal, and associates the evidence information with service information corresponding to the service interaction, to respond to a service revocation request.

Optionally, the target service includes a payment service.

FIG. 8 is a schematic structural diagram illustrating an intelligent wearable device NFC service processing device, according to one or more embodiments of this specification. The device is applied to an intelligent wearable device, and the device includes: at least one processor; and a storage communicatively connected to the at least one processor.
The storage stores instructions that are capable of being executed by the at least one processor, and the instructions are executed by the at least one processor, so that the at least one processor is capable of performing the following operations: controlling an NFC card reader on the intelligent wearable device to be in an off state; receiving an NFC service trigger instruction for the intelligent wearable device in the off state; entering a specified service application on the intelligent wearable device in response to the NFC service trigger instruction, and automatically switching the NFC card reader from the off state to an on state by using the specified service application; reading target service information from a target NFC implement through the NFC card reader in the on state after the intelligent wearable device is close to the target NFC implement, so that the specified service application obtains the target service information; and executing a corresponding target service based on the target service information by using the specified service application.

Based on the same idea, one or more embodiments of this specification provide a non-volatile computer storage medium, applied to an intelligent wearable device. The medium stores computer-executable instructions, and the computer-executable instructions are set as follows: controlling an NFC card reader on the intelligent wearable device to be in an off state; receiving an NFC service trigger instruction for the intelligent wearable device in the off state; entering a specified service application on the intelligent wearable device in response to the NFC service trigger instruction, and automatically switching the NFC card reader from the off state to an on state by using the specified service application; reading target service information from a target NFC implement through the NFC card reader in the on state after the intelligent wearable device is close to the target NFC implement, so that the specified service application obtains the target service information; and executing a corresponding target service based on the target service information by using the specified service application.

In the 1990s, whether a technical improvement is a hardware improvement (for example, an improvement to a circuit structure, such as a diode, a transistor, or a switch) or a software improvement (an improvement to a method procedure) can be clearly distinguished. However, as technologies develop, current improvements to many method procedures can be considered as direct improvements to hardware circuit structures. Almost all designers obtain the corresponding hardware circuit structure by programming the improved method process into the hardware circuit. Therefore, a method procedure can be improved by using a hardware entity module. For example, a programmable logic device (PLD) (for example, a field programmable gate array (FPGA)) is such an integrated circuit, and a logical function of the PLD is determined by a user through device programming. The designer performs programming to "integrate" a digital system into a PLD without requesting a chip manufacturer to design and produce an application-specific integrated circuit chip. In addition, currently, instead of manually manufacturing an integrated circuit chip, such programming is mostly implemented by using "logic compiler" software. The "logic compiler" software is similar to a software compiler used to develop and write a program. Original code needs to be written in a particular programming language before being compiled. The language is referred to as a hardware description language (HDL). There are many HDLs such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). Currently, the Very-High-Speed Integrated Circuit Hardware Description Language (VHDL) and Verilog are most commonly used. It should also be clear to a person skilled in the art that a hardware circuit for implementing a logical method procedure can be easily obtained by performing slight logic programming on the method procedure by using the above-mentioned several hardware description languages and programming the method procedure into an integrated circuit.

A controller can be implemented by using any appropriate method. For example, the controller can be in a form of a microprocessor or a processor, a computer-readable medium that stores computer-readable program code (such as software or firmware) that can be executed by the microprocessor or the processor, a logic gate, a switch, an application-specific integrated circuit (ASIC), a programmable logic controller, or an embedded microcontroller. Examples of the controller include but are not limited to the following microcontrollers: ARC 625D, Atmel AT91SAM, Microchip PIC18F26K20, and Silicon Labs C8051F320. A storage controller can also be implemented as a part of control logic of a storage. A person skilled in the art also knows that in addition to implementing the controller by using only the computer-readable program code, logic programming can be performed on method steps to enable the controller to implement the same function in a form of a logic gate, a switch, an application-specific integrated circuit, a programmable logic controller, an embedded microcontroller, etc. Therefore, the controller can be considered as a hardware component, and an apparatus that is configured to implement various functions and that is included in the controller can also be considered as a structure in the hardware component. Alternatively, the apparatus configured to implement various functions can even be considered as both a software module implementing a method and a structure in the hardware component.

The system, apparatus, module, or unit described in the above-mentioned embodiments can be specifically implemented by a computer chip or an entity, or can be implemented by a product having a certain function. A typical implementation device is a computer. For example, the computer can be, for example, a personal computer, a laptop computer, a cellular phone, a camera phone, a smartphone, a personal digital assistant, a media player, a navigation device, an email device, a game console, a tablet computer, or a wearable device, or a combination of any of these devices.

For ease of description, the above apparatus is described by dividing functions into various units. Certainly, when this specification is implemented, functions of the units can be implemented in one or more pieces of software and/or hardware.

A person skilled in the art should understand that embodiments of this specification can be provided as methods, systems, or computer program products. Therefore, the embodiments of this specification can use a form of hardware only embodiments, software only embodiments, or embodiments with a combination of software and hardware. In addition, a form of a computer program product that is implemented on one or more computer-usable storage media (including but not limited to a disk storage, a CD-ROM, an optical storage, etc.) that include computer-usable program code can be used in the embodiments of this specification.

This specification is described with reference to the flowcharts and/or block diagrams of the method, the device (system), and the computer program product according to embodiments of this specification. It is worthwhile to understand that computer program instructions can be used to implement each procedure and/or each block in the flowcharts and/or the block diagrams and a combination of procedures and/or a combination of blocks in the flowcharts and/or the block diagrams. These computer program instructions can be provided for a general-purpose computer, a special-purpose computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions can alternatively be stored in a computer-readable storage that can instruct the computer or the another programmable data processing device to work in a specific way, so the instructions stored in the computer-readable storage generate an artifact that includes an instruction apparatus. The instruction apparatus implements a specific function in one or more procedures in the flowcharts and/or in one or more blocks in the block diagrams.

These computer program instructions can alternatively be loaded onto the computer or the another programmable data processing device, so that a series of operation steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

In a typical configuration, a computing device includes one or more central processing units (CPU), input/output interfaces, network interfaces, and memories.

The memory can include a non-persistent storage, a random access memory (RAM), a non-volatile memory, and/or another form in a computer-readable medium, for example, a read-only memory (ROM) or a flash random access memory (flash RAM). The memory is an example of the computer-readable medium.

Computer-readable media, including permanent and non-permanent, removable and non-removable media, can be implemented by any method or technology for information storage. The information can be computer-readable instructions, a data structure, a program module, or other data. Examples of the computer storage medium include but are not limited to a phase-change random access memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a cassette magnetic tape, a magnetic tape/magnetic disk storage or another magnetic storage device, or any other non-transmission medium. The computer storage medium can be configured to store information accessible to a computing device. As described in this specification, the computer-readable medium does not include computer-readable transitory media such as a modulated data signal and a carrier.

It should also be noted that the term "include", "include" or any other variant thereof is intended to cover non-exclusive inclusion, so that a process, method, product, or device that includes a series of elements includes not only those elements but also other elements that are not explicitly listed, or includes elements inherent in such a process, method, product, or device. Without more constraints, an element preceded by "includes a ..." does not preclude the existence of additional identical elements in the process, method, product, or device that includes the element.

This specification can be described in the general context of computer-executable instructions executed by a computer, for example, a program module. Generally, the program module includes a routine, a program, an object, a component, a data structure, etc. executing a specific task or implementing a specific abstract data type. This specification can alternatively be practiced in distributed computing environments. In the distributed computing environments, tasks are performed by remote processing devices connected through a communication network. In a distributed computing environment, the program module can be located in both local and remote computer storage media including storage devices.

The embodiments of this specification are described in a progressive manner. For same or similar parts in the embodiments, references can be made to each other. Each embodiment focuses on a difference from another embodiment. Particularly, the apparatus, device, and nonvolatile computer storage medium embodiments are basically similar to the method embodiment, and therefore is briefly described. For a related part, refer to some descriptions in the method embodiment.

Specific embodiments of this specification are described above. Other embodiments fall within the scope of the appended claims. In some cases, the actions or steps described in the claims can be performed in an order different from that in the embodiments and desired results can still be achieved. In addition, the process depicted in the accompanying drawings does not necessarily require the shown particular execution order to achieve the desired results. In some implementations, multitasking and parallel processing are feasible or may be advantageous.

The above-mentioned content is merely one or more embodiments of this specification, and is not intended to limit this specification. A person skilled in the art knows that one or more embodiments of this specification can have various modifications and changes. Any modification, equivalent replacement, improvement, etc. made within the spirit and principle of one or more embodiments of this specification shall fall within the scope of the claims of this specification.

### EXAMPLES

Although the present invention is defined in the claims, it should be understood that the present invention can also (alternatively) be defined in accordance with the following examples:
1. An intelligent wearable device NFC service processing method, applied to an intelligent wearable device, wherein the method comprises:
   controlling an NFC card reader on the intelligent wearable device to be in an off state;
   receiving an NFC service trigger instruction for the intelligent wearable device in the off state;
   entering a specified service application on the intelligent wearable device in response to the NFC service trigger instruction, and automatically switching the NFC card reader from the off state to an on state by using the specified service application;
   reading target service information from a target NFC implement through the NFC card reader in the on state after the intelligent wearable device is close to the target NFC implement, so that the specified service application obtains the target service information; and
   executing a corresponding target service based on the target service information by using the specified service application.
2. The method according to example 1, wherein the receiving an NFC service trigger instruction for the intelligent wearable device in the off state specifically comprises:
   displaying an NFC service shortcut entry after the intelligent wearable device turns on a screen, wherein the NFC service shortcut entry is generated based on an NFC service non-shortcut access path of the specified service application, and is used to quickly enter an NFC card reader mode page of the specified service application; and
   receiving a corresponding generated NFC service trigger instruction for the intelligent wearable device in response to an access operation performed by a user on the NFC service shortcut entry.
3. The method according to example 2, wherein the turning on the screen is triggered by the user by using a first gesture, the NFC service shortcut entry prompts a second gesture, and neither the first gesture nor the second gesture is a tap operation; and
   the receiving a corresponding generated NFC service trigger instruction for the intelligent wearable device in response to an access operation performed by a user on the NFC service shortcut entry specifically comprises:
   receiving the corresponding generated NFC service trigger instruction for the intelligent wearable device in response to the second gesture that the user continues to make after the first gesture.
4. The method according to example 1, wherein after the switching the NFC card reader from the off state to an on state, the method further comprises:
   displaying progress change prompt information corresponding to the on state, wherein the progress change prompt information comprises countdown information and/or detected progress information of the target service; and
   if it is determined, based on the progress change prompt information, that a corresponding progress ends, putting the specified service application in a background or turning off the specified service application, or switching the NFC card reader back to the off state.
5. The method according to any one of examples 1 to 4, wherein the intelligent wearable device is a smartwatch.
6. The method according to example 1, wherein the intelligent wearable device is a child smartwatch; and
   the method further comprises:
   interacting with a parent mobile terminal, so that the parent mobile terminal determines one or more nearby NFC implements applicable to the child smartwatch.
7. The method according to example 6, wherein the interacting with a parent mobile terminal further comprises:
   sharing a location of the child smartwatch with the parent mobile terminal, wherein the parent mobile terminal is a smartphone or a tablet; and
   receiving a navigation route from the child smartwatch to the target NFC implement and authorization information for the target NFC implement that are sent by the parent mobile terminal, to perform service interaction with the target NFC implement based on the authorization information, wherein
   the target NFC implement is selected from the one or more NFC implements, and the navigation route is generated based on the location.
8. The method according to example 7, wherein after the interacting with a parent mobile terminal, the method further comprises:
   determining that the child smartwatch arrives near the target NFC implement, and performing service interaction with the target NFC implement;
   obtaining service limitation information that is set by the parent mobile terminal for the target NFC implement, wherein the service limitation information comprises service type limitation information and/or service transaction amount limitation information;
   determining whether the service interaction exceeds a limitation corresponding to the service limitation information; and
   blocking the service interaction if yes.
9. The method according to example 7, wherein after the interacting with a parent mobile terminal, the method further comprises:
   determining that the child smartwatch arrives near the target NFC implement, and performing service interaction with the target NFC implement;
   in a process of the service interaction, collecting a minor transaction evidence by using one or more predetermined sensors, to generate corresponding privacy-preserved evidence information; and
   reporting the evidence information to the parent mobile terminal, so that a server obtains the evidence information by using the child smartwatch or the parent mobile terminal, and associates the evidence information with service information corresponding to the service interaction, to respond to a service revocation request.
10. The method according to any one of examples 1 to 4, wherein the target service comprises a payment service.
11. An intelligent wearable device NFC service processing apparatus, applied to an intelligent wearable device, wherein the apparatus comprises:
   a control module, configured to control an NFC card reader on the intelligent wearable device to be in an off state;
   a receiving module, configured to receive an NFC service trigger instruction for the intelligent wearable device in the off state;
   a switching module, configured to: enter a specified service application on the intelligent wearable device in response to the NFC service trigger instruction, and automatically switch the NFC card reader from the off state to an on state by using the specified service application;
   a reading module, configured to read target service information from a target NFC implement through the NFC card reader in the on state after the intelligent wearable device is close to the target NFC implement, so that the specified service application obtains the target service information; and
   an execution module, configured to execute a corresponding target service based on the target service information by using the specified service application.
12. The apparatus according to example 11, wherein the receiving module is configured to: display an NFC service shortcut entry after the intelligent wearable device turns on a screen, wherein the NFC service shortcut entry is generated based on an NFC service non-shortcut access path of the specified service application, and is used to quickly enter an NFC card reader mode page of the specified service application; and
   receive a corresponding generated NFC service trigger instruction for the intelligent wearable device in response to an access operation performed by a user on the NFC service shortcut entry.
13. The apparatus according to example 12, wherein the turning on the screen is triggered by the user by using a first gesture, the NFC service shortcut entry prompts a second gesture, and neither the first gesture nor the second gesture is a tap operation; and
   the switching module is configured to receive the corresponding generated NFC service trigger instruction for the intelligent wearable device in response to the second gesture that the user continues to make after the first gesture.
14. The apparatus according to example 11, wherein after switching the NFC card reader from the off state to an on state, the switching module is configured to: display progress change prompt information corresponding to the on state, wherein the progress change prompt information comprises countdown information and/or detected progress information of the target service; and
   if it is determined, based on the progress change prompt information, that a corresponding progress ends, put the specified service application in a background or turn off the specified service application, or switch the NFC card reader back to the off state.
15. The apparatus according to any one of examples 11 to 14, wherein the intelligent wearable device is a smartwatch.
16. The apparatus according to example 11, wherein the intelligent wearable device is a child smartwatch; and
   the apparatus further comprises:
   an interaction module, configured to interact with a parent mobile terminal, so that the parent mobile terminal determines one or more nearby NFC implements applicable to the child smartwatch.
17. The apparatus according to example 16, wherein the interaction module is configured to: share a location of the child smartwatch with the parent mobile terminal, wherein the parent mobile terminal is a smartphone or a tablet; and
   receive a navigation route from the child smartwatch to the target NFC implement and authorization information for the target NFC implement that are sent by the parent mobile terminal, to perform service interaction with the target NFC implement based on the authorization information, wherein
   the target NFC implement is selected from the one or more NFC implements, and the navigation route is generated based on the location.
18. The apparatus according to example 17, wherein after interacting with the parent mobile terminal, the interaction module is configured to: determine that the child smartwatch arrives near the target NFC implement, and perform service interaction with the target NFC implement;
   obtain service limitation information that is set by the parent mobile terminal for the target NFC implement, wherein the service limitation information comprises service type limitation information and/or service transaction amount limitation information;
   determine whether the service interaction exceeds a limitation corresponding to the service limitation information; and
   block the service interaction if yes.
19. The apparatus according to example 17, wherein after interacting with the parent mobile terminal, the interaction module is configured to: determine that the child smartwatch arrives near the target NFC implement, and perform service interaction with the target NFC implement;
   in a process of the service interaction, collect a minor transaction evidence by using one or more predetermined sensors, to generate corresponding privacy-preserved evidence information; and
   report the evidence information to the parent mobile terminal, so that a server obtains the evidence information by using the child smartwatch or the parent mobile terminal, and associates the evidence information with service information corresponding to the service interaction, to respond to a service revocation request.
20. The apparatus according to any one of examples 11 to 14, wherein the target service comprises a payment service.
21. An intelligent wearable device NFC service processing device, applied to an intelligent wearable device, wherein the device comprises:
   at least one processor; and
   a storage communicatively connected to the at least one processor, wherein
   the storage stores instructions that are capable of being executed by the at least one processor, and the instructions are executed by the at least one processor, so that the at least one processor is capable of performing the following operations:
      controlling an NFC card reader on the intelligent wearable device to be in an off state;
      receiving an NFC service trigger instruction for the intelligent wearable device in the off state;
      entering a specified service application on the intelligent wearable device in response to the NFC service trigger instruction, and automatically switching the NFC card reader from the off state to an on state by using the specified service application;
      reading target service information from a target NFC implement through the NFC card reader in the on state after the intelligent wearable device is close to the target NFC implement, so that the specified service application obtains the target service information; and
      executing a corresponding target service based on the target service information by using the specified service application.

## Claims

1. An intelligent wearable device NFC service processing method, applied to an intelligent wearable device, wherein the method comprises:
controlling an NFC card reader on the intelligent wearable device to be in an off state;
receiving an NFC service trigger instruction for the intelligent wearable device in the off state;
entering a specified service application on the intelligent wearable device in response to the NFC service trigger instruction, and automatically switching the NFC card reader from the off state to an on state by using the specified service application;
reading target service information from a target NFC implement through the NFC card reader in the on state after the intelligent wearable device is close to the target NFC implement, so that the specified service application obtains the target service information; and
executing a corresponding target service based on the target service information by using the specified service application.

2. The method according to claim 1, wherein the receiving an NFC service trigger instruction for the intelligent wearable device in the off state specifically comprises:
displaying an NFC service shortcut entry after the intelligent wearable device turns on a screen, wherein the NFC service shortcut entry is generated based on an NFC service non-shortcut access path of the specified service application, and is used to quickly enter an NFC card reader mode page of the specified service application; and
receiving a corresponding generated NFC service trigger instruction for the intelligent wearable device in response to an access operation performed by a user on the NFC service shortcut entry; optionally
wherein the turning on the screen is triggered by the user by using a first gesture, the NFC service shortcut entry prompts a second gesture, and neither the first gesture nor the second gesture is a tap operation; and
the receiving a corresponding generated NFC service trigger instruction for the intelligent wearable device in response to an access operation performed by a user on the NFC service shortcut entry specifically comprises:
receiving the corresponding generated NFC service trigger instruction for the intelligent wearable device in response to the second gesture that the user continues to make after the first gesture.

3. The method according to any one of claims 1 or 2, wherein after the switching the NFC card reader from the off state to an on state, the method further comprises:
displaying progress change prompt information corresponding to the on state, wherein the progress change prompt information comprises countdown information and/or detected progress information of the target service; and
if it is determined, based on the progress change prompt information, that a corresponding progress ends, putting the specified service application in a background or turning off the specified service application, or switching the NFC card reader back to the off state.

4. The method according to any one of claims 1 to 3, wherein the intelligent wearable device is a smartwatch; and/or wherein the target service comprises a payment service.

5. The method according to claim 1, wherein the intelligent wearable device is a child smartwatch; and
the method further comprises:
interacting with a parent mobile terminal, so that the parent mobile terminal determines one or more nearby NFC implements applicable to the child smartwatch.

6. The method according to claim 5, wherein the interacting with a parent mobile terminal further comprises:
sharing a location of the child smartwatch with the parent mobile terminal, wherein the parent mobile terminal is a smartphone or a tablet; and
receiving a navigation route from the child smartwatch to the target NFC implement and authorization information for the target NFC implement that are sent by the parent mobile terminal, to perform service interaction with the target NFC implement based on the authorization information, wherein
the target NFC implement is selected from the one or more NFC implements, and the navigation route is generated based on the location.

7. The method according to claim 6, wherein
(i) after the interacting with a parent mobile terminal, the method further comprises:
determining that the child smartwatch arrives near the target NFC implement, and performing service interaction with the target NFC implement;
obtaining service limitation information that is set by the parent mobile terminal for the target NFC implement, wherein the service limitation information comprises service type limitation information and/or service transaction amount limitation information;
determining whether the service interaction exceeds a limitation corresponding to the service limitation information; and
blocking the service interaction if yes; or
(ii) after the interacting with a parent mobile terminal, the method further comprises:
determining that the child smartwatch arrives near the target NFC implement, and performing service interaction with the target NFC implement;
in a process of the service interaction, collecting a minor transaction evidence by using one or more predetermined sensors, to generate corresponding privacy-preserved evidence information; and
reporting the evidence information to the parent mobile terminal, so that a server obtains the evidence information by using the child smartwatch or the parent mobile terminal, and associates the evidence information with service information corresponding to the service interaction, to respond to a service revocation request.

8. An intelligent wearable device NFC service processing apparatus, applied to an intelligent wearable device, wherein the apparatus comprises:
a control module, configured to control an NFC card reader on the intelligent wearable device to be in an off state;
a receiving module, configured to receive an NFC service trigger instruction for the intelligent wearable device in the off state;
a switching module, configured to: enter a specified service application on the intelligent wearable device in response to the NFC service trigger instruction, and automatically switch the NFC card reader from the off state to an on state by using the specified service application;
a reading module, configured to read target service information from a target NFC implement through the NFC card reader in the on state after the intelligent wearable device is close to the target NFC implement, so that the specified service application obtains the target service information; and
an execution module, configured to execute a corresponding target service based on the target service information by using the specified service application.

9. The apparatus according to claim 8, wherein the receiving module is configured to: display an NFC service shortcut entry after the intelligent wearable device turns on a screen, wherein the NFC service shortcut entry is generated based on an NFC service non-shortcut access path of the specified service application, and is used to quickly enter an NFC card reader mode page of the specified service application; and
receive a corresponding generated NFC service trigger instruction for the intelligent wearable device in response to an access operation performed by a user on the NFC service shortcut entry; optionally
wherein the turning on the screen is triggered by the user by using a first gesture, the NFC service shortcut entry prompts a second gesture, and neither the first gesture nor the second gesture is a tap operation; and
the switching module is configured to receive the corresponding generated NFC service trigger instruction for the intelligent wearable device in response to the second gesture that the user continues to make after the first gesture.

10. The apparatus according to claim 8, wherein after switching the NFC card reader from the off state to an on state, the switching module is configured to: display progress change prompt information corresponding to the on state, wherein the progress change prompt information comprises countdown information and/or detected progress information of the target service; and
if it is determined, based on the progress change prompt information, that a corresponding progress ends, put the specified service application in a background or turn off the specified service application, or switch the NFC card reader back to the off state.

11. The apparatus according to any one of claims 8 to 10, wherein the intelligent wearable device is a smartwatch; and/or wherein the target service comprises a payment service.

12. The apparatus according to any one of claims 8 to 11, wherein the intelligent wearable device is a child smartwatch; and
the apparatus further comprises:
an interaction module, configured to interact with a parent mobile terminal, so that the parent mobile terminal determines one or more nearby NFC implements applicable to the child smartwatch.

13. The apparatus according to claim 12, wherein the interaction module is configured to: share a location of the child smartwatch with the parent mobile terminal, wherein the parent mobile terminal is a smartphone or a tablet; and
receive a navigation route from the child smartwatch to the target NFC implement and authorization information for the target NFC implement that are sent by the parent mobile terminal, to perform service interaction with the target NFC implement based on the authorization information, wherein
the target NFC implement is selected from the one or more NFC implements, and the navigation route is generated based on the location.

14. The apparatus according to claim 13, wherein
(i) after interacting with the parent mobile terminal, the interaction module is configured to: determine that the child smartwatch arrives near the target NFC implement, and perform service interaction with the target NFC implement;
obtain service limitation information that is set by the parent mobile terminal for the target NFC implement, wherein the service limitation information comprises service type limitation information and/or service transaction amount limitation information;
determine whether the service interaction exceeds a limitation corresponding to the service limitation information; and
block the service interaction if yes; or
(ii) after interacting with the parent mobile terminal, the interaction module is configured to:
determine that the child smartwatch arrives near the target NFC implement, and perform service interaction with the target NFC implement;
in a process of the service interaction, collect a minor transaction evidence by using one or more predetermined sensors, to generate corresponding privacy-preserved evidence information; and
report the evidence information to the parent mobile terminal, so that a server obtains the evidence information by using the child smartwatch or the parent mobile terminal, and associates the evidence information with service information corresponding to the service interaction, to respond to a service revocation request.

15. An intelligent wearable device comprising:
at least one processor; and
a storage communicatively connected to the at least one processor, wherein
the storage stores instructions that are capable of being executed by the at least one processor, and the instructions are executed by the at least one processor, so that the at least one processor is capable of performing the following operations:
controlling an NFC card reader on the intelligent wearable device to be in an off state;
receiving an NFC service trigger instruction for the intelligent wearable device in the off state;
entering a specified service application on the intelligent wearable device in response to the NFC service trigger instruction, and automatically switching the NFC card reader from the off state to an on state by using the specified service application;
reading target service information from a target NFC implement through the NFC card reader in the on state after the intelligent wearable device is close to the target NFC implement, so that the specified service application obtains the target service information; and
executing a corresponding target service based on the target service information by using the specified service application.
